# EUROPEAN PATENT APPLICATION

(11) **EP 1 073 177 A2**
(43) Date of publication of application: **31.01.2001**
(21) Application number: 00113195.2
(22) Date of filing: 03.07.2000
(51) Int. Cl.: H02J 9/02

(54) **Emergency lighting unit**

(30) Priority: 28.07.1999 IT BO990423
(71) Applicant: G. BARGELLINI & C. S.p.A., I-40066 Pieve di Cento, Bologna (IT)
(72) Inventor: Bargellini, Giulio, 40066 Pieve di Cento (Prov. of Bologna) (IT)
(74) Representative: Modiano, Guido, Dr.-Ing.

(57) **Abstract**

An emergency lighting unit, comprising at least one optical device (2) for lighting and a separate electric power device (3) which is connected to the electric mains and supplies power to the optical device by means of conductors (7).

## Description

The present invention relates to an emergency lighting unit for use indoors and outdoors in the public, service and industrial sectors.

Several conventional emergency lighting units are currently commercially available in which the light source and the unit for supplying power to the light source are provided according to the most disparate criteria.

Such units contain a system which is capable of autonomously supplying power to a fluorescent tube when mains voltage fails or in emergency conditions.

In this way, an enclosed space can be lit by one or more units by virtue of a reserve of energy which each unit receives from an auxiliary power supply device constituted by batteries and electronic power devices.

Each one of these units is a separate single body, requires no service closets, has a degree of protection known technically as "IP" which makes it adapted also for environments in which dust, steam or vapors, and jets of water are present or for outdoor installations, and can also be provided with autodiagnostic devices which are designed to periodically check the operating condition of the fluorescent tube and the autonomous operation capacity of the batteries.

In particular, it has been observed that the units currently in use are scarcely adaptable to the possibility to change the luminous flux, since they would have to be replaced with others sized according to the required luminous flux.

All this has brought about, among emergency lighting unit manufacturers, a wide range of units having an equally wide variety of shapes and dimensions which vary according to the required light flux, forcing the manufacturers to use several materials and different technologies, and causing some confusion among dealers and consumers in appreciating the product.

Moreover, other problems of these units are due to their overall dimension and shape; such problems are strongly felt particularly in halls used for exhibitions, in museums and in enclosed spaces, in which the emergency lighting device unit must blend in with the architectural and interior decoration choices.

The aim of the present invention is to provide an emergency lighting unit which can be easily adapted to luminous flux variation requirements.

Within the scope of this aim, an object of the present invention is to provide an emergency lighting unit which, thanks to its adaptability, can reduce the wide range of commercially available units.

Another object of this invention is to provide a lighting unit which is compact, thus solving the problem of space occupation and of the corresponding shapes.

Still another object of this invention is to provide a structure which is simple, relatively easy to provide in practice, safe in use, effective in operation, and relatively low in cost.

These and other objects which will become better apparent hereinafter are achieved by an emergency lighting unit according to the present invention, characterized in that it comprises at least one optical device for lighting and a separate electric power device which is connected to the electric mains and supplies power to said optical device by means of conductors.

Further characteristics and advantages of the present invention will become better apparent from the following detailed description of a preferred but not exclusive embodiment of an emergency lighting unit, illustrated only by way of non-limitative example in the accompanying drawings, wherein:

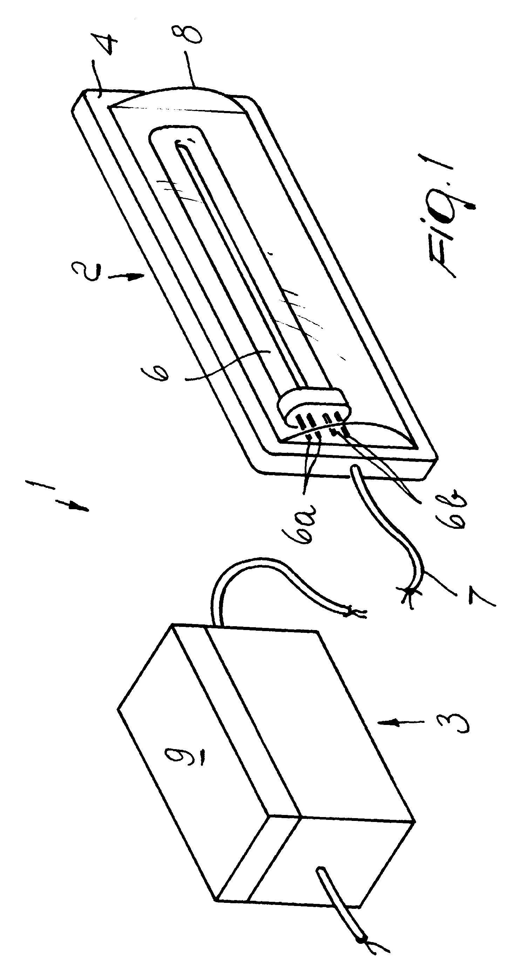

Figure 1 is a schematic perspective view of an emergency lighting unit according to the present invention;

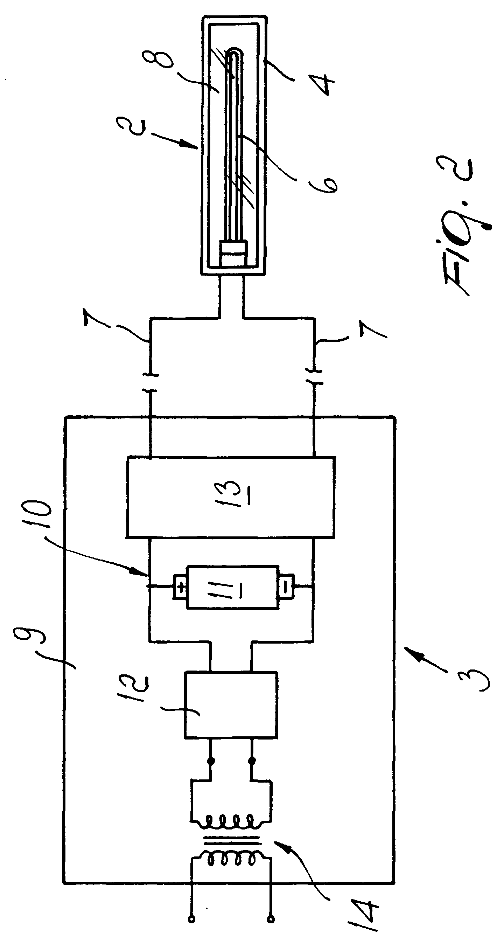

Figure 2 is a schematic representation of the unit with an electrical diagram of the power supply of the unit;
Figure 3 is a perspective view of one of the components of the unit; and

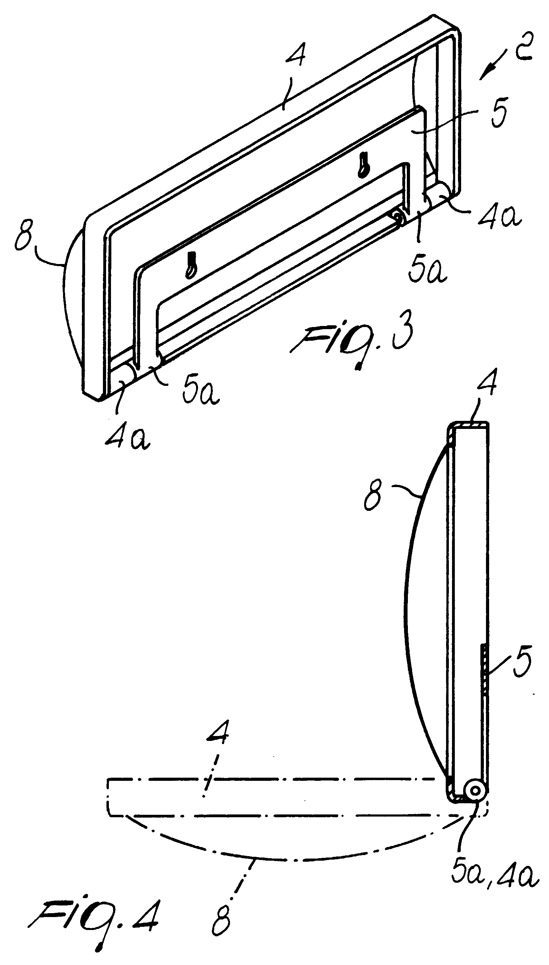

Figure 4 is a side view of the component illustrated in Figure 3.

With reference to the figures, 1 generally designates an emergency lighting unit according to the invention.

The unit 1 comprises an optical device 2 and an electric power device 3.

The optical device 2 is constituted by a box-like enclosure 4 on which sleeves 4a are provided laterally and rotatably engage pivots 5a of a support 5 which is rigidly couplable to the ceiling or wall, so as to allow to orientate the optical device 2.

The enclosure 4 accommodates, in a central region, a conventional compact fluorescent tube 6 which is in contact with two electrodes 6a, 6b leading to conductors 7 which are connected, at their opposite end, to the electric power device 3. The receptacle of the fluorescent tube 6 is closed by a cover 8 made of transparent material.

The electric power device 3 is spaced from the optical device 2, in a concealed position, and can be accommodated in false ceilings, in walls or at the main electrical panel of the mains power supply system or at the junction box of the electrical system, so as to allow inspection without resorting to ladders and scaffolds. The electric power device 3 comprises a casing 9 which contains removable power supply means 10, constituted by an energy storage device 11. The energy storage device 11 is detachably connected in parallel to current rectifier means 12 on one side and to an inverter 13 on the other side. The rectifier means 12 are connected to a step-down transformer 14 which is connected to the mains power supply system. The inverter 13 is connected in output to the fluorescent tube 6 by means of the conductors 7.

In the construction of the unit 1, the value taken into consideration is the average emergency luminous flux, expressed in Lm (lumen). For an equal power level of the conventional compact fluorescent tube 6, for example 11 W, by replacing the energy storage device 11 with another one having a different power level it is possible to cover average luminous flux ranges from 100 Lm to 900 Lm. In this way, if it is necessary to vary the average light flux in an enclosed space, there is no need to act on the entire unit and replace it with another one: it is sufficient to adopt an energy storage device 11 having a different power level.

The optical device 2 is fixed, by means of the support 5, to the walls and/or ceiling so as to allow to orientate the required luminous flux, while the electric power device 3 is fixed by means of the casing 9 at the wall or main electrical panel, so as to allow easy access.

It is evident that the invention thus conceived achieves the intended aim and objects.

In particular, it allows to reduce the wide range of units in the field of emergency lighting, since the optical device can remain the same for all units. This facilitates the selection and management of the product both for the manufacturer and for the consumer.

The invention thus applied also allows the unit to be designed according to the actual flux it emits rather than to the theoretical power level of the lamp.

The invention allows to facilitate the integration of the emergency system with the enclosed space, allowing the manufacturer to devote attention to its shape, which is a significant factor in view of the architectural requirements imposed by particular enclosed spaces, such as hospitals, museums, cinemas and halls used for exhibitions.

Moreover, the invention thus conceived allows to facilitate maintenance operations, which are concentrated on the electric power device, which is located remotely with respect to the optical device and in a position which allows easy operator access. Maintenance is facilitated by the fact that the casing that contains the energy storage device and the electrical and electronic components can be in a position which can be reached very easily, while the luminaire is fixed to the ceiling and generally at heights which are not easy to reach. This is a considerable advantage, since the battery must be replaced frequently over time to ensure its operating capacity and must be delivered to specifically provided disposal centers. In this manner, the casing that contains the battery and the electric and electronic components can be considered in the same way as sockets, switches and the like are considered at present. Easy access would also allow the advantage of optimizing the luminous flux set by the standards without removing the luminaire and the electric power device even after activating the system.

Moreover, the invention thus conceived allows to obtain advantageous management results, allowing the power device to supply a plurality of optical devices.

Moreover, the invention thus conceived allows better diffusion of the luminous flux thanks to the possibility to orientate the device.

In practical execution, the component elements may be replaced with other technically equivalent ones.

In practice, the materials employed, as well as the shapes and the dimensions, may be any according to requirements without thereby abandoning the scope defined by the appended claims.

The disclosures in Italian Patent Application No. BO99A000423 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An emergency lighting unit, characterized in that it comprises at least one optical device suitable for lighting and a separate electric power device which is connected to the electric mains and supplies power to said optical device by means of conductors.

2. The lighting unit according to claim 1, characterized in that said electric power device comprises removable power supply means which are adapted to vary the supply power level to said optical device.

3. The lighting unit according to claims 1 and 2, characterized in that said optical device comprises a box-like enclosure which accommodates a fluorescent tube whose average luminous flux can be modified as said supply power level varies, so as to cover a wide range of said average luminous flux.

4. The lighting unit according to one or more of the preceding claims, characterized in that said electric power device comprises a battery which is detachably connected in input to current rectifier means leading to a step-down transformer which is connected to the mains, said battery being connected in output to an inverter which is connected to said fluorescent tube by means of said conductors.

5. The lighting unit according to claim 3, characterized in that sleeves are provided on said enclosure and rotatably engage pivots of a support which can be fixed to a wall, ceiling and the like so as to allow spatial orientation of said optical device.
